Europäisches Patentamt

(19) European Patent Office

Office européen des brevets

(11) Publication number: **0 081 013**
**B1**

(12) **EUROPEAN PATENT SPECIFICATION**

(45) Date of publication of patent specification: **05.11.86**

(21) Application number: **81305710.6**

(22) Date of filing: **03.12.81**

(51) Int. Cl.⁴: **F 16 L 3/22,** F 28 F 9/00, G 21 C 3/34

(54) **Tube support structures.**

(43) Date of publication of application:
**15.06.83 Bulletin 83/24**

(45) Publication of the grant of the patent:
**05.11.86 Bulletin 86/45**

(84) Designated Contracting States:
**CH DE FR GB IT LI**

(56) References cited:
**DE-A-2 027 968**
**FR-A-1 381 787**
**FR-A-1 469 071**
**FR-A-2 223 650**
**US-A-3 118 497**
**US-A-4 036 461**
**US-A-4 090 918**

(73) Proprietor: **THE BABCOCK & WILCOX
COMPANY**
**1010 Common Street P.O. Box 60035
New Orleans Louisiana 70160 (US)**

(72) Inventor: **Jabsen, Felix S.
1324 Krise Circle
Lynchburg Virginia 24503 (US)**

(74) Representative: **Cotter, Ivan John et al
D. YOUNG & CO. 10 Staple Inn
London WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to tube support structures, for example for heat exchangers such as tube and shell steam generators.

Tube and shell steam generators such as those used in nuclear power plants include a vessel containing a large number of stainless steel tubes affixed at their ends to tube sheets. The tubes are typically arranged in an equilateral triangular array and are supported at a number of positions along their length by support structures. Support structures for steam generators should hold the tubes rigidly to thereby suppress vibration, should impose a minimum of resistance to the flow of fluid around the tubes, and should minimize the occurence of crevices around the tubes where impurities may build up. Known tube support structures have to a large extent failed in one or more of these objectives. An orifice type tube support plate presented a high resistance to fluid flow. This type also suffered from a large number of crevices around the tubes. As impurities deposited and built up between a tube and the plate, the tube was pinched together. This phenomenon is commonly known as "denting".

A broached plate type tube support also suffers from the denting phenomenon, albeit to a far lesser degree than the orifice type plate.

Moreover, plate type supports are extremely expensive to fabricate and transport.

Other types of support structures include bars held between rows of the tubes. However, these structures are prone to flow-induced vibrations resulting in damage to the tubes.

British Patent Specification No. 1 029 061 discloses a spacing grid for nuclear fuel rods wherein a plurality of sinusoidal strips formed with transverse saw cuts are interlocked to form article receiving pockets bounded by portions of the strips intermediate the saw cuts. Each strip is formed with projections intermediate the saw cuts, the projections engaging the articles in the pockets at locations at which the two strips on opposite sides of the pocket converge towards on another.

British Patent Specification No. 1 126 733 discloses a locating structure for locating elongate heat exchange elements and comprising a stack of strips disposed crosswise and on edge over the whole heat exchange length. The strips are interconnected by interengaging slots.

USA Patent Specification No. 4 090 918 discloses a spacer structure for fuel rods comprising a square grid pattern of interlocked slotted ribs with buttons on the ribs to contact the fuel rods.

Embodiments of the present invention described below employ an "egg crate" structure intended to yield low flow resistance, high strength and low cost. These embodiments of the invention are thus designed to support the tubes of a heat exchanger, more specifically a tube and shell steam generator, though structures embodying the invention can be used to support tubes in other applications.

According to the invention there is provided a tube support structure for an equilateral triangular array of generally parallel tubes, the structure comprising:

a plurality of first strips each extending in a first direction generally perpendicular to the tubes and between a corresponding pair of rows of tubes of the array;

a plurality of second strips each extending in a second direction generally perpendicular to the tubes and between a corresponding pair of rows of tubes of the array;

a plurality of third strips each extending in a third direction generally perpendicular to the tubes and between a corresponding pair of rows of tubes of the array;

said first direction, said second direction, and said third direction each being oriented generally sixty degrees from the other two;

each of the plurality of second strips and the plurality of third strips having a plurality of slots formed on one edge thereof;

each of the plurality of first strips having a plurality of slots formed on both edges thereof; and

the plurality of first strips being slottingly engaged with and affixed to the plurality of second strips at one edge of the plurality of first strips and being slottingly engaged with and affixed to the plurality of third strips at the other edge of the plurality of first strips;

characterised in that said first strips are mutually parallel;

said second strips are mutually parallel;

said third strips are mutually parallel;

said first strips, said second strips and said third strips together define a multiplicity of hexagonal cells within the tube support structure each encompassing a single tube;

an edge of each of the plurality of first strips is generally coplanar with an edge of each of the plurality of second strips and another edge of each of the plurality of first strips is generally coplanar with an edge of each of the plurality of third strips;

the plurality of first strips is affixed to the plurality of second strips and the plurality of third strips at the respective coplanar edges by welding; and

a plurality of dimples are formed in the plurality of strips to protrude into the cells to engage and thereby support the tubes within the hexagonal cells, the dimples amounting to at least eight for each of the tubes.

In an equilateral triangular array of tubes, such as in a steam generator, each tube of the array, except tubes at the edges thereof, is equidistant from six surrounding tubes and is a member of three identifiable rows of tubes, each of the three rows being oriented in a corresponding direction rotated sixty degrees relative to the directions of the other two rows. The present invention includes three groups of grid strips each running through the tubes along a corresponding one of the three directions.

In one embodiment, one group of strips are full height and run between the tubes in the first direction, and the second and third groups of strips are of a partial height and run between the tubes in the second and third directions respectively. The full height strips are slotted on both the top and bottom edges for receiving the partial height strips, which are slotted on only one edge.

The structure of embodiments of the present invention described below provides a number of advantages including simplicity and decreased time of fabrication; a decrease in pressure drop of fluids going through the structure thereby enabling a reduction in required pumping power; reduction of shipping weight; decrease of vibration of tubes and steam generator oscillation; increased flexibility of the grid resulting in increased flexibility of the tubes to reduce the occurrence of denting; better steam flow conditions and better flow distribution at the upper section of the steam generator due to the open lattice configuration; and the tube supports will not grip the tubes too tightly but will allow slipping to accommodate thermal expansion.

Steam generator tube support structures embodying the invention and described below provide flexible contact support to suppress vibration, are not susceptible to denting, are simple and inexpensive to construct and transport, and pose minimal resistance to fluid flow.

The invention will now be further described, by way of illustrative and non-limiting example, with reference to the accompanying drawings, in which

Figure 1 is a partial perspective view of a steam generator tube support structure constituting a preferred embodiment of the present invention;

Figure 2 is a partial elevational view of a full height component strip of the structure of Figure 1;

Figure 3 is a partial elevational view like Figure 2 showing a partial height strip;

Figure 4 is a partial elevational view like Figure 3 showing an alternative dimple structure;

Figure 5 is a partial plan view of the structure of Figure 1;

Figure 6 is a plan view of the steam generator tube support structure embodying the present invention;

Figure 7 is a partial plan view of the structure of Figure 6 showing angular alignment means;

Figure 8 is a partial elevational view taken along the line VIII—VIII of Figure 7;

Figure 9 is a partial plan view of the structure of Figure 6 showing elevational alignment means;

Figure 10 is a partial elevation view taken along the line X—X of Figure 9;

Figure 11 is a partial plan cross-sectional view of a heat exchanger employing a preferred embodiment of the invention;

Figure 12 is a partial perspective view like Figure 1 showing an alternative embodiment; and

Figure 13 is a partially exploded sectional elevation view of a manway structure.

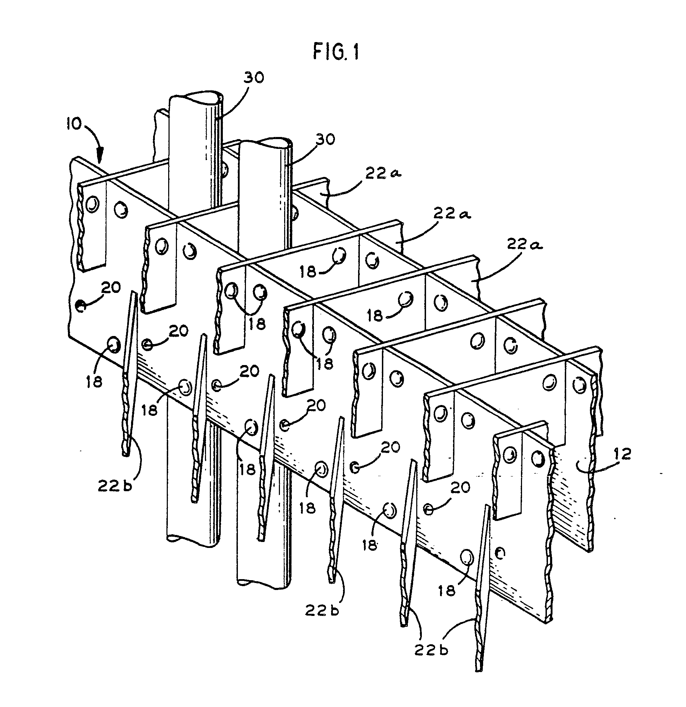

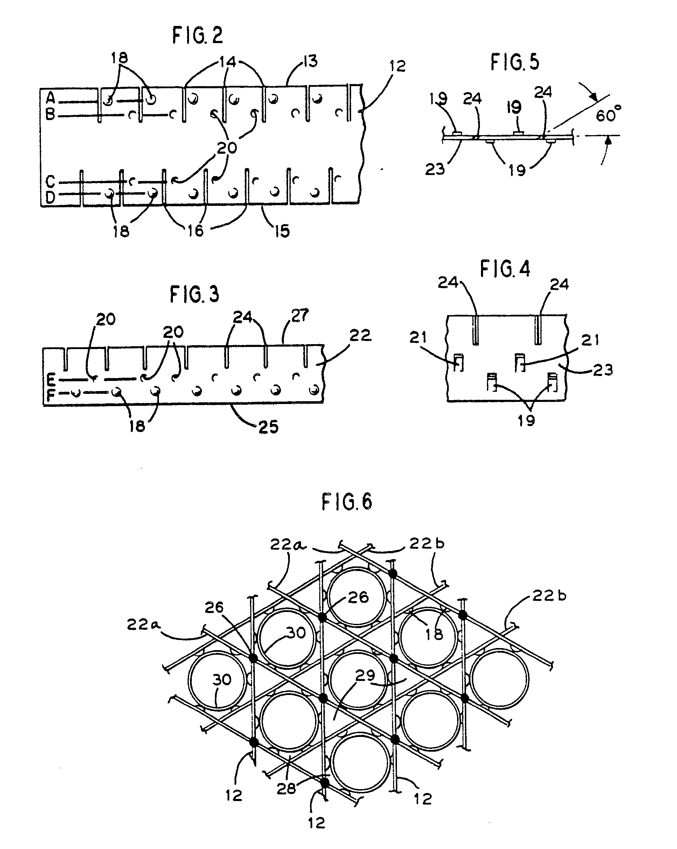

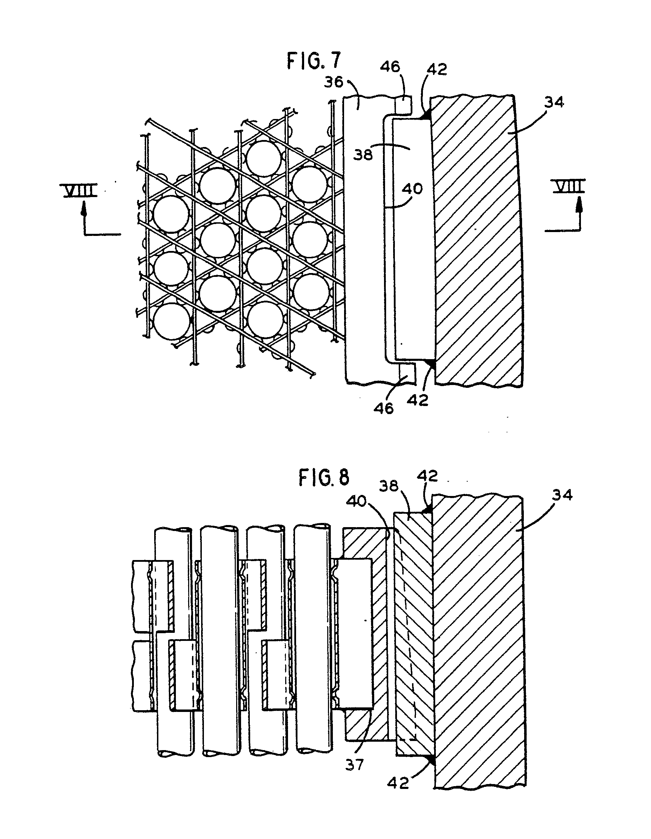

Figure 1 is a perspective view of a steam generator tube support structure 10 constituting a preferred embodiment of the present invention. The structure 10 includes two types of strips 12 and 22 arranged into three strip groups 12, 22a, and 22b. The strip types 12 and 22 are described in detail below. Note that each of the strip groups is oriented at a 60° angle with respect to each of the other two groups. When viewed from the top, as in Figure 7, this orientation of the strip groups defines hexagonal tube cells (28—Figure 6) in an equilateral triangular array.

As viewed in Figure 1, the strips 12 are full height and slotted on both their top and bottom edges. The strips 22a and 22b are of partial height and are slotted on only their bottom and top edges, respectively; and are of identical structure.

Figure 2 shows a strip 12 in elevation. Slots 14 and 16 are cut in opposing edges 13 and 15 of the strip 12 and are mutually staggered. The staggered arrangement is important to obtain a hexagonal cell. If the arrangement was not staggered, but, rather the slots 14 and 16 were in line, the result would be triangular cells. Dimples 18 are formed in the strip 12. Recesses 20 are the rear sides of dimples 18.

Figure 3 is an elevational view of a partial height strip 22. Slots 24 are formed in an edge 27 of the strip 22. Dimples 18 are also formed in the strip 22. When the strips 22 are mated with the strips 12 via the slots 24 and 14, edges 25 of the strips 22 and the edges 13 of the strips 12 lie generally in the same plane. When the strips 22 are mated with the strips 12 via the slots 24 and 16, the edges 25 of the strips 22 and the edges 15 of the strips 12 lie generally in the same plane.

Figure 4 shows an alternative embodiment 23 of the partial height strip. The strip 23 differs from the strip 22 of Figure 3 in that rectangular dimples 19 are employed. Recesses 21 of the dimples 19 are also shown.

Figure 5 shows the angle of the slots 24 with the plane of the strip 23 as being 60°. The slots 16 and 14 of the strip 12 and the slots 24 of the strip 22 are also angled at 60°. Note from Figure 5 that in the preferred embodiment of the invention the dimples 19 (as well as 18 (not shown)) always protrude away from the 60° angle formed by the slots 24 as well as 14, 16 and 24 (not shown) with respect to the plane of the strip. In other words, the recesses 21 or 20 are always facing into the 60° angle. Applying this to the strip 12 of Figure 2 illustrates that the slots 14 and 16 are not cut parallel in this direction but rather at angles of 60° with each other (as well as with the strip). This arrangement is necessary to assemble the strips to form the hexagonal cells 28.

One further feature of the preferred embodiment that is illustrated by Figures 2 to 5 is the judicious positioning of the dimples 18 and 19. Assuming that the edges 13 and 15 of the strip 12 in Figure 2 lie in horizontal planes, the dimples 18 are positioned to define four additional horizontal planes A, B, C, and D. Similarly, the dimples 18 of the strip 22 of Figure 3 define planes E and F.

Upon assembly of the strips 22 into the strips 12, to form the arrangement of Figure 2 and also Figure 6, the planes E and F of the strips 22a lie coplanar with the planes B and A, respectively, of the strips 12 and the planes E and F of the strips 22b lie coplanar with the planes C and D, respectively, of the strips 12. Thus, upon assembly of the support structure, each hexagonal cell 28 has eight dimples 18 protruding into it.

If desired, the strips can be assembled such that directly opposing dimples 18 in each cell 28 always lie in the same plane.

Figure 6 shows how the dimples 28 engage tubes 30 of the heat exchanger and that welds 26 affix the strips 22a to the strips 12 at the edges 13. Similar welds (not shown) are provided to affix the strips 22b to the strips 12 at the edges 15. Figure 6 also shows triangular cells 29 which lie between the hexagonal cells 28. The cells 29 are open to allow the free flow of a fluid therethrough.

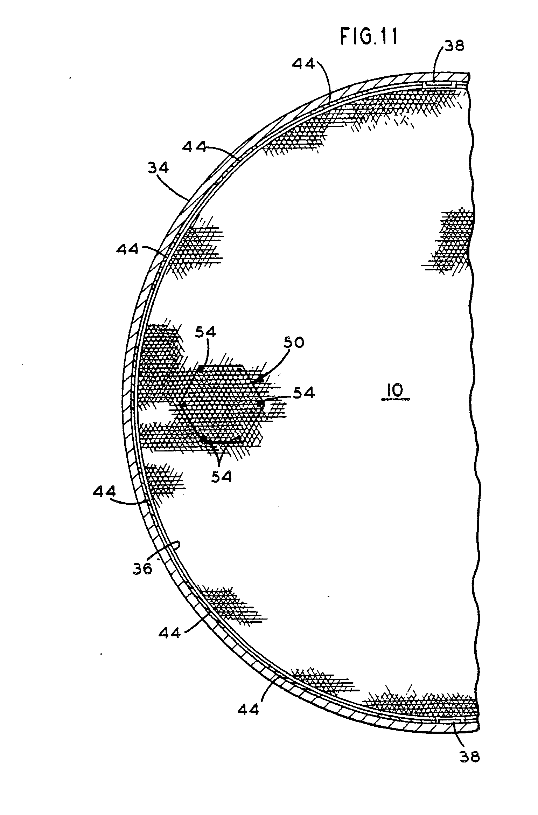

Figure 11 is a partial sectional plan view of a tube and shell heat exchanger having a shell or shroud 34. A hexagonal support structure 10 as described above is circumscribed by a ring 36 which is described in more detail below. The ring 36 is aligned and supported in the shroud 34 by keyway lugs 38 and wedges 44.

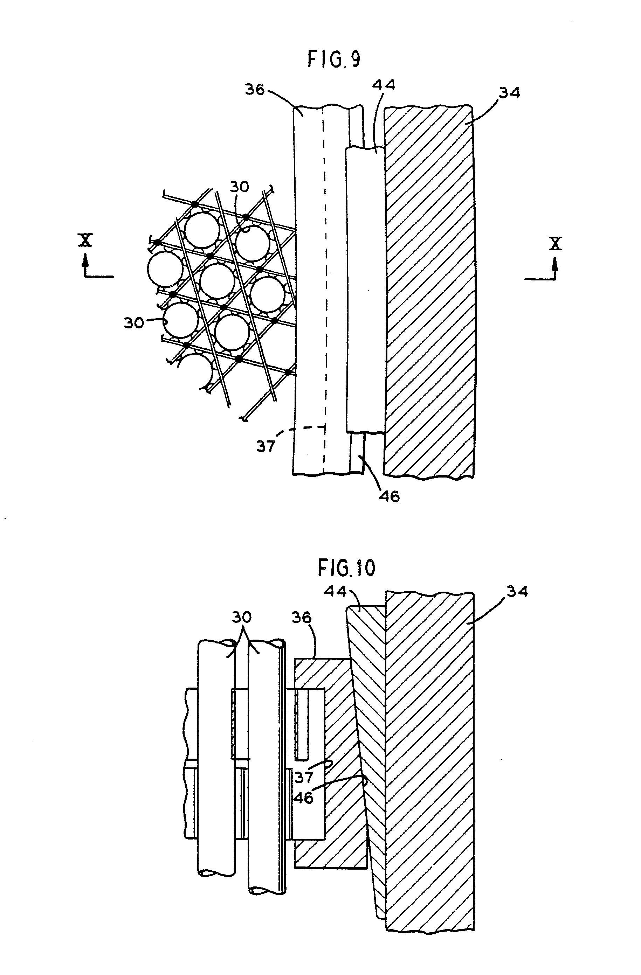

Figure 7 shows the ring 36 in relation to the shroud 34. A keyway notch 40 mates with a keyway lug 38 to secure and align the ring 36 in angular relation with the shroud 34. The lug 38 is welded at welds 42 or affixed in some other suitable manner to the shroud 34. An angle surface 46 of the ring 36 is provided in conjunction with wedges 44 described in detail below. A cross-sectional view of Figure 7 is shown in Figure 8. Note that a ring notch or slot 37 is provided in the ring 36, the support structure 10 being fitted into and affixed by welding or other suitable means in the notch 37.

Figure 9 is a plan view of a portion of the wedge 44. The wedge 44 is affixed to the shroud 34 by welding or other suitable means. The ring notch 37 is shown in phantom in Figure 9. Figure 10 shows the relationship of the wedge 44 with the ring 36. The surface 46 of the ring 36 mates essentially flush with the wedge 44 and is affixed thereto by welding or other suitable means. Figure 10 is an elevational view showing that the wedge 44 tapers downwardly thereby providing structural interference resistance to movement of the ring 36 in the upward direction. This is so arranged because the net force on the ring 36 is in the upward direction due to upward fluid flow in the shell side of the heat exchanger.

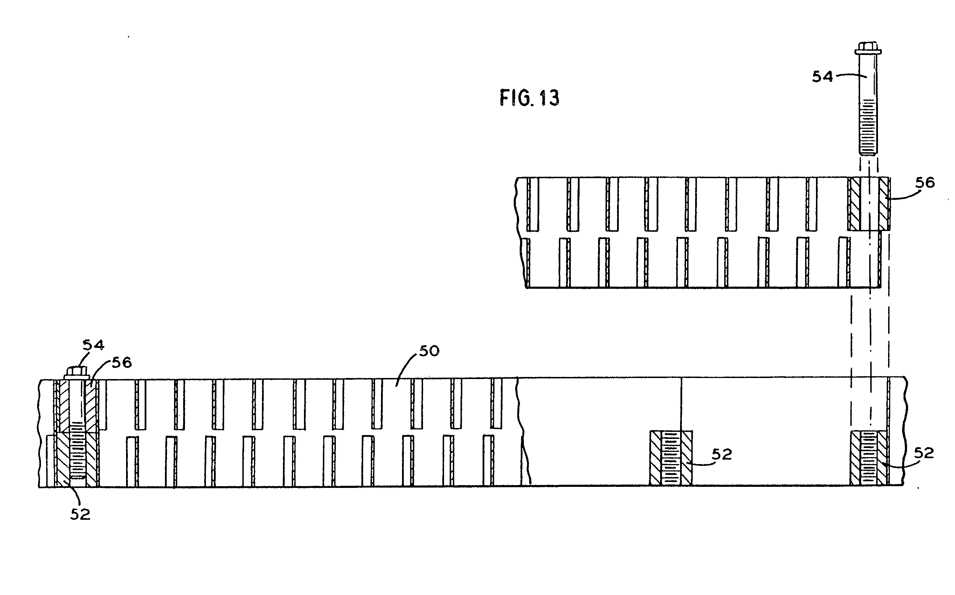

Referring back to Figure 11, attention is drawn to a manway 50 which is provided to allow access throughout the heat exchanger during assembly thereof. Bolts 54 are provided to secure the manway 50 to the grid structure 10. The manway 50 is shown in more detail in Figure 13. Nuts 52 are fixed in the structure 10. Bushings 56 are fixed in the manway 50 in axial alignment with corresponding nuts 52. The bolts 54 extend through the bushings 56 and are threaded into the nuts 52 thereby affixing the manway 50 to the structure 10.

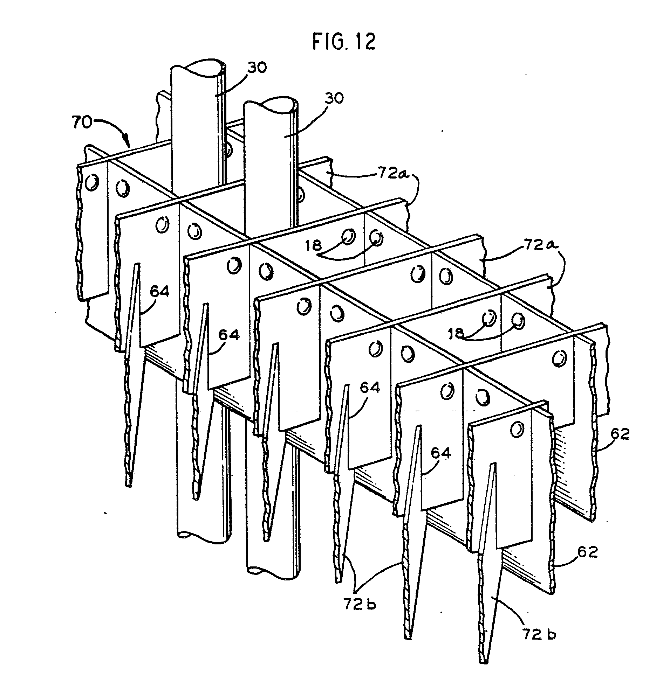

Figure 12 shows an alternative steam generator tube support structure 70 embodying the invention. Full height strips 62 lie in a first orientation and partial height strips 72a and 72b lie in second and third orientations, each orientation being 60° from the other two. This arrangement is the same as that described above. The difference in this embodiment is that the strips 72a and 72b intersect each other at slots 64. This was not the case for the strips 22a and 22b in the structure 10.

The overlapping provides additional rigidity and strength for the structure 70 in the lateral direction. The overlapping could extend all the way to the edges of the strips 72a and 72b. In such a configuration the strips 72a and 72b would be of the same height as the strips 62.

Claims

1. A tube support structure for an equilateral triangular array of generally parallel tubes, the structure (10, 70) comprising:

a plurality of first strips (12; 62) each extending in a first direction generally perpendicular to the tubes (30) and between a corresponding pair of rows of tubes of the array;

a plurality of second strips (22a; 72a) each extending in a second direction generally perpendicular to the tubes (30) and between a corresponding pair of rows of tubes of the array;

a plurality of third strips (22b; 72b) each extending in a third direction generally perpendicular to the tubes (30) and between a corresponding pair of rows of tubes of the array;

said first direction, said second direction, and said third direction each being oriented generally sixty degrees from the other two;

each of the plurality of second strips (22a; 72a) and the plurality of thirds strips (22b; 72b) having a plurality of slots (24) formed on one edge (27) thereof;

each of the plurality of first strips (12; 62) having a plurality of slots (14, 16) formed on both edges (13, 15) thereof; and

the plurality of first strips (12; 62) being slottingly engaged with and affixed to the plurality of second strips (22a; 72a) at one edge of the plurality of first strips (12; 62) and being slottingly engaged with and affixed to the plurality of third strips (22b; 72b) at the other edge of the plurality of first strips (12; 62);

characterised in that said first strips (12; 62) are mutually parallel;

said second strips (22a; 72a) are mutually parallel;

said third strips (22b; 72b) are mutually parallel;

said first strips (12; 62), said second strips (22a; 72a) and said third strips (22b; 72b) together define a multiplicity of hexagonal cells (28) within the tube support structure (10; 70) each encompassing a single tube;

an edge of each of the plurality of first strips (12; 62) is generally coplanar with an edge of each of the plurality of second strips (22a; 72a) and another edge of each of the plurality of first strips (12; 62) is generally coplanar with an edge of each of the plurality of third strips (22b; 72b);

the plurality of first strips (12; 62) is affixed to the plurality of second strips (22a; 72a) and the plurality of third strips (22b; 72b) at the respective coplanar edges by welding (26); and

a plurality of dimples (18; 19) are formed in the plurality of strips (12, 22a, 22b; 62, 72a, 72b) to protrude into the cells to engage and thereby support the tubes (30) within the hexagonal cells (28), the dimples (18; 19) amounting to at least eight for each of the tubes (30).

2. A structure according to claim 1, wherein each slot (14, 16, 24) is formed in the corresponding strip (12, 22a, 22b; 62, 72a, 72b) at an angle corresponding to the direction of the strip engaging such corresponding strip.

3. A structure according to claim 1 or claim 2, wherein at least some of the dimples (18) are round.

4. A structure according to any one of claims 1 to 3, wherein at least some of the dimples (19) are rectangular.

5. A structure according to any one of claims 1 to 4, wherein at least some of the plurality of second strips (72a) slottingly engage (64) at least some of the plurality of third strips (72b).

6. A structure according to any one of claims 1 to 5, wherein a ring (36) circumscribes the perimeter of the strips and has a ring slot (37) formed on the inside surface thereof to accept the strips.

7. A structure according to claim 6, wherein the ring (36) is supported in a shell (34) of a heat exchanger by a plurality of wedges (44) affixed to the shell and affixed to the ring (36), the wedges (44) being tapered towards a direction of intended flow of a fluid through the shell (34) and around the tubes (30).

8. A structure according to claim 7, comprising a plurality of keyway lugs (38) affixed to the shell (34) and a plurality of keyway notches (40) formed in the ring (36) and engaging the keyway lugs (38) to provide angular alignment of the ring (36) in the shell (34).

9. A structure according to any one of claims 1 to 6, wherein the plurality of first strips (12; 62), the plurality of second strips (22a; 72a) and the plurality of third strips (22b; 72b) are cut to form a manway (50) and the manway is secured to the structure (10) by at least one bolt (54) extending through the manway (50) and threaded into at least one nut (52) secured to the structure (10).

10. A structure according to claim 9, wherein the at least one bolt (54) extends through at least one bushing (56) before engaging the at least one nut (52).

**Patentansprüche**

1. Rohr-Stützstruktur für ein gleichseitig rechteckige Anordnung allgemein paralleler Rohre, wobei die Struktur (10, 706 mehrere erste Streifen (12; 62), von denen sich jeder in einer ersten Richtung allgemein senkrecht zu den Rohren (30) und zwischen einem entsprechenden Paar von Rohrreihen der Anordnung erstreckt, mehrere zweite Streifen (22a; 72a), von denen sich jeder in einer zweiten Richtung allgemein senkrecht zu den Rohren (30) und zwischen einem entsprechenden Paar von Rohrreihen der Anordnung erstreckt, mehrere dritte Streifen (22b; 72b), von denen sich jeder in einer dritten Richtung allgemein senkrecht zu den Rohren (30) und zwischen einem entsprechenden Paar von Rohrreihen der Anordnung erstreckt, aufweist, wobei die erste Richtung, die zweite Richtung und die dritte Richtung jeweils mit allgemein 60° gegenüber den beiden anderen ausgerichtet ist, jeder der mehreren zweiten Streifen (22a; 72a) und der mehreren dritten Streifen (22b; 72b) mehrere an einer Kante (27) derselben ausgebildete Schlitze (24) hat, jeder der mehreren ersten Streifen (12; 62) mehrere an beiden Kanten (13, 15) derselben ausgebildete Schlitze (14, 16) hat und die mehreren der ersten Streifen (12; 62) mit Hilfe der Schlitze an einer Kante der mehreren der ersten Streifen (12; 62) in die mehreren zweiten Streifen (22a; 72a) eingreifen und so an ihnen befestigt sind und mit Hilfe von Schlitzen an der anderen Kante der mehreren ersten Streifen (12; 62) in die mehreren dritten Streifen (22b; 72b) eingreifen und so an ihnen befestigt sind, dadurch gekennzeichnet, daß die ersten Streifen (12; 62) zueinander parallel sind, die zweiten Streifen (22a; 72a) zueinander parallel sind, die dritten Streifen (22b; 72b) zueinander parallel sind, die ersten Streifen (12; 62), die zweiten Streifen (22a; 72a) und die dritten Streifen (22b; 72b) miteinander eine Vielzahl hexagonaler Zellen (28) in der Rohr-Stützstruktur (10; 70) definieren, von denen jede ein einzelnes Rohr umgreift, eine Kante eines jeden der mehreren ersten Streifen (12; 62) allgemein in der gleichen Ebene wie die Kante eines jeden der mehreren zweiten Streifen (22a; 72a) liegt und eine andere Kante eines jeden der mehreren ersten Streifen (12; 62) allgemein in einer Ebene mit einer Kante eines jeden der mehreren dritten Streifen (22b; 72b) liegt, die mehreren ersten Streifen (12; 62) an den mehreren zweiten Streifen (22a; 72a) und den mehreren dritten Streifen (22b; 72b) an den betreffenden koplanaren Kanten durch Schweißen (26) verbunden sind und mehrere Vertiefungen (18, 19) in den mehreren Streifen (12, 22a, 22b; 62, 72a, 72b) ausgebildet sind und in die Zellen vorspringen, um in Anlage an die Rohre (30) in den hexagonalen Zellen (28) zu kommen und sie so abzustützen, wobei die Anzahl der Vertiefungen (18, 19) wenigstens acht für jedes der Rohre (30) ist.

2. Struktur nach Anspruch 1, bei der jeder Schlitz (14, 16, 24) in dem entsprechenden Streifen (12, 22a, 22b; 62, 72a, 72b) in einem Winkel entsprechend der Richtung des Streifens, der in einen solchen entsprechenden Streifen eingreift, ausgebildet ist.

3. Struktur nach Anspruch 1 oder Anspruch 2, bei der wenigstens einige der Vertiefungen (18) rund sind.

4. Struktur nach einem der Ansprüche 1 bis 3, worin wenigstens einige der Vertiefungen (19) rechteckig sind.

5. Struktur nach einem der Ansprüche 1 bis 4, worin wenigstens einige der mehreren zweiten Streifen (72a) mit den Schlitzen (64) bei wenigstens einigen der mehreren dritten Streifen (72b) eingreifen.

6. Struktur nach einem der Ansprüche 1 bis 5, bei der ein Ring (36) den Außenumfang der Streifen umgibt und einen Ringschlitz (37) besitzt, der auf seiner Innenfläche ausgebildet ist, um die Streifen anzunehmen.

7. Struktur nach Anspruch 6, bei der der Ring (36) in einem Gehäuse (34) eines Wärmetauschers von mehreren Keilen (44) gehalten ist, die an dem Gehäuse und an dem Ring (36) befestig sind, wobei die Keile (44) zu einer Richtung beabsichtigter Fließmittelströmung durch das Gehäuse (34) und um die Rohr (30) hin sich verjüngen.

8. Struktur nach Anspruch 7 mit mehreren Keilnutansätzen (38), die an dem Gehäuse (34) befestigt sind, und mehreren Keilnuten (40), die in dem Ring (36) ausgebildet sind und in die Keilnutansätze (38) eingreifen, um eine Winkelausrichtung des Ringes (36) in dem Gehäuse (34) zu bekommen.

9. Struktur nach einem der Ansprüche 1 bis 6, bei der die mehreren ersten Streifen (12; 62), die mehreren zweiten Streifen (22a; 72a) und die mehreren dritten Streifen (22b; 72b) unter Ausbildung eines Zugangs (50) geschnitten sind und der Zugang an der Struktur (10) durch wenigstens einen Bolzen (54) befestigt ist, der sich durch den Zugang (50) erstreckt und in wenigstens eine an der Struktur (10) befestigte Mutter (52) eingeschraubt ist.

10. Struktur nach Anspruch 9, bei der wenigstens ein Bolzen (54) sich durch wenigstens eine Buchse (56) erstreckt, bevor er in Eingriff mit wenigstens einer Mutter (52) gelangt.

**Revendications**

1. Structure de support de tubes pour formation triangulaire équilatérale de tubes généralement parallèles, la structure (10, 70) comprenant:
une série de premières bandes (12; 62) s'étendant toutes suivant une première direction généralement perpendiculaire aux tubes (30) et entre deux rangées correspondantes de tubes de la formation;
une série de seconces bandes (22a; 72a) s'étendant toutes suivant une seconde direction généralement perpendiculaire aux tubes (30) et entre deux rangées correspondantes de tubes de la formation;
une série de troisième bandes (22b; 72b) s'étendant toutes suivant une troisième direction généralement perpendiculaire aux tubes (30) et entre deux rangées correspondantes de tubes de la formation;
ladite première direction, ladite seconde direction et la dite troisième direction étant orientées chacune dans l'ensemble à soixante degrés des deux autres;
chacune des bandes de la série de secondes bandes (22a; 72a) et de la série de troisièmes bandes (22b; 72b) présentant une série de fentes (24) ménagées dans l'un (27) de ses bords;
chacune des bandes de la série de premières bandes (12; 62) présentant une série de fentes (14, 16) ménagées sur ses deux bords (13, 15); et
la série de premières bandes (12; 62) étant engagée par ses fentes et fixée sur la série de secondes bandes (22a; 72a) sur un bord de la série de premières bandes (12; 62) et étant engagée par ses fentes et fixée sur la série de troisièmes bandes (22b; 72b) sur l'autre bord de la série de premières bandes (12; 62);
caractérisée en ce que lesdites premières bandes (12; 62) sont parallèles entre elles;
lesdites secondes bandes (22a; 72a) sont parallèles entre elles;
lesdites troisièmes bandes (22b; 72b) sont parallèles entre elles;
lesdites premières bandes (12; 62), lesdites secondes bandes (22a; 72a) et lesdites troisièmes bandes (22b; 72b) délimitent ensemble à l'intérieur de la structure de support de tubes (10; 70) une multiplicité d'alvéoles hexagonaux (28) dont chacun entoure un seul tube;
un bord de chacune des bandes de la série de premières bandes (12; 62) est généralement coplanaire à un bord de chaque bande de la série de secondes bandes (22a; 72a) et un autre bord de chacune des bandes de la série de premières bandes (12; 62) est généralement coplanaire à un bord de chacune des bandes de la série de troisièmes bandes (22b; 72b);
la série de premières bandes (12; 62) est fixée à la série de secondes bandes (22a; 72a) et à la série de troisièmes bandes (22b; 72b) au niveau des bords coplanaires respectifs par soudage (26); et
une série de bosses (18; 19) sont ménagées dans la série de bandes (12, 22a, 22b; 62, 72a, 72b) pour saillir à l'intérieur des alvéoles pour rencontrer et supporter par là les tubes (30) à l'intérieur des alvéoles hexagonaux (28), le nombre des bosses (18; 19) se montant à au moins huit pour chacun des tubes (30).

2. Structure selon la revendication 1, dans laquelle chaque fente (14, 16, 24) est ménagée dans la bande correspondante (12, 22a, 22b; 62, 72a, 72b) sous un angle correspondant à la direction de la bande coopérant avec cette bande correspondante.

3. Structure selon la revendication 1 ou 2, dans laquelle certaines au moins des bosses (18) sont rondes.

4. Structure selon la revendication 1 ou 3, dans laquelle certaines au moins des bosses (19) sont rectangulaires.

5. Structure selon l'une quelconque des revendications 1 à 4, dans laquelle certaines au moins des bandes de la série de secondes bandes (72a) sont engagées par des fentes (64) sur certaines au moins des bandes de la série de troisièmes bandes (72b).

6. Structure selon l'une quelconque des revendications 1 à 5, dans laquelle un anneau (36) entoure le pourtour des bandes et présente une rainure annulaire (37) ménagée dans sa surface intérieure pour recevoir les bandes.

7. Structure selon la revendication 6, dans laquelle l'anneau (36) est supporté dans la coque (34) d'un échangeur de chaleur par une série de clavettes (44) fixées à la coque et fixées à l'anneau (36), les clavettes (44) s'épaississant dans le sens prévu d'écoulement de fluide à travers la coque (34) et autour des tubes (30).

8. Structure selon la revendication 7, comprenant une série d'oreilles de clavetage (38) fixées à la coque (34) et une série d'encoches de clavetage (40) ménagées dans l'anneau (36) et engagées sur les oreilles de clavetage (38) pour positionner angulairement l'anneau (36) dans la coque (34).

9. Structure selon l'une quelconque des revendications 1 à 6, dans laquelle la série de premières bandes (12; 62), la série de secondes bandes (22a; 72a) et la série de troisièmes bandes (22b; 72b) sont sectionnées pour former une passerelle (50) et la passerelle est fixée à la structure (10) par au moins un boulon (54) traversant la passerelle (50) et vissé dans au moins un écrou (52) fixé à la structure (10).

10. Structure selon la revendication 9, dans laquelle le ou chaque boulon (54) traverse au moins un manchon (56) avant de s'engager dans le ou chaque écrou (52).

FIG. 1

## FIG. 2

## FIG. 5

## FIG. 3

## FIG. 4

## FIG. 6

FIG. 7

FIG. 8

FIG.9

FIG.10

FIG.11

## FIG. 12

FIG. 13